(19) Europäisches Patentamt
European Patent Office
Office européen des brevets

(11) **EP 2 446 599 B1**

(12) **EUROPÄISCHE PATENTSCHRIFT**

(45) Veröffentlichungstag und Bekanntmachung des Hinweises auf die Patenterteilung:
**20.04.2016 Patentblatt 2016/16**

(21) Anmeldenummer: **09776885.7**

(22) Anmeldetag: **23.06.2009**

(51) Int Cl.:
***H04L 29/06*** *(2006.01)*

(86) Internationale Anmeldenummer:
**PCT/EP2009/004705**

(87) Internationale Veröffentlichungsnummer:
**WO 2010/149191 (29.12.2010 Gazette 2010/52)**

(54) **GEGEN MANIPULATION GESCHÜTZTE DATENÜBERTRAGUNG ZWISCHEN AUTOMATISIERUNGSGERÄTEN**

DATA TRANSMISSION BETWEEN AUTOMATION DEVICES SECURED AGAINST MANIPULATION

TRANSMISSION SECURISEE CONTRE LA MANIPULATION DE DONNEES ENTRE DES APPAREILS D'AUTOMATISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**02.05.2012 Patentblatt 2012/18**

(73) Patentinhaber: **Siemens Aktiengesellschaft 80333 München (DE)**

(72) Erfinder: **NEUMANN, Götz 13627 Berlin (DE)**

(56) Entgegenhaltungen:
**US-A1- 2001 049 787      US-A1- 2005 036 616
US-A1- 2006 036 871      US-A1- 2006 123 226**

EP 2 446 599 B1

**Beschreibung**

Die Erfindung betrifft ein Verfahren zum Übertragen eines Datentelegramms von einem ersten Automatisierungsgerät einer Automatisierungsanlage an ein zweites Automatisierungsgerät der Automatisierungsanlage. Die Erfindung betrifft auch entsprechende Automatisierungsgeräte und eine Automatisierungsanlage mit solchen Automatisierungsgeräten.

Für die Automatisierung elektrischer Energieversorgungsnetze, industrieller Prozesse oder von Fertigungsanlagen werden Automatisierungsanlagen eingesetzt, die üblicherweise eine Vielzahl von Automatisierungsgeräten umfassen. Im Falle von elektrischen Energieversorgungsnetzen weist eine Automatisierungsanlage als Automatisierungsgeräte beispielsweise Schutzgeräte, Leitgeräte, Stationsleitgeräte und Netzleitgeräte auf. Hierbei übernehmen die genannten Automatisierungsgeräte unterschiedliche Aufgaben zum Steuern, Überwachen und Schützen des elektrischen Energieversorgungsnetzes.

Häufig stellen die automatisierten Prozesse sicherheitskritische Anwendungen dar. So bestehen beispielsweise bezüglich eines elektrischen Energieversorgungsnetzes erhöhte Sicherheitsanforderungen, weil es sich dabei um einen wesentliche Bestandteil einer der Infrastruktur einer bestimmten Region handelt, um z.B. Haushalte, öffentliche Einrichtungen, gewerbliche und industrielle Betriebe, Telekommunikationsanlagen und andere elektrische Verbraucher mit elektrischer Energie zu versorgen.

Deshalb sind die Automatisierungsanlagen vor fehlerhaften Übertragungen von Datentelegrammen zu schützen, wie sie beispielsweise durch äußere Störungen von Kommunikationsverbindungen auftreten können. Bei der Datenübertragung in Automatisierungsanlagen finden außerdem immer häufiger öffentlich bekannte Kommunikationsstrukturen Anwendung; beispielsweise werden in Anlagen zur Automatisierung von Energieversorgungsnetzen vermehrt Kommunikationsnetzwerke verwendet, die die bekannte Ethernet-Technologie nutzen. Der Einsatz weit verbreiteter Kommunikationstechnologien ermöglicht einerseits die einfache Einbindung neuer Geräte und Applikationen in bestehende Netzwerke und die Interoperabilität von Automatisierungsgeräten verschiedener Hersteller, stellt andererseits jedoch auch einen potentiellen Angriffspunkt der Automatisierungsanlagen bezüglich Manipulation Dritter dar.

Denkbar wäre z.B. ein Szenario, bei dem ein unbefugter Dritter in ein ungeschütztes Kommunikationsnetz einer Automatisierungsanlage gefälschte oder veränderte Datentelegramme einspeist, um damit gezielt Fehlfunktionen der Automatisierungsanlage auszulösen. Beispielsweise können von dem Angreifer hierbei solche Datentelegramme eingespeist werden, die eine Neukonfigurierung der Topologie des Kommunikationsnetzwerkes anstoßen. Bei wiederholtem Einspeisen solcher Datentelegramme kann ein Kommunikationsnetzwerk einer Automatisierungsanlage durch ständiges Neukonfigurieren in einen Überlastzustand gebracht werden, in dem es schlimmstenfalls nicht mehr dazu fähig ist, die zur Automatisierung benötigten Datentelegramme zu übermitteln.

Deshalb sind die zur Automatisierung des jeweiligen Prozesses eingesetzten Automatisierungsanlagen einerseits vor fehlerhaften Datenübertragungen und andererseits vor Manipulationen durch äußeren Eingriff zu schützen.

Zur Absicherung der Kommunikationswege zwischen Automatisierungsgeräten ist es heutzutage bekannt, Verschlüsselungsverfahren, beispielsweise gemäß einer PKI (Public Key Infrastruktur) einzusetzen, bei der die übermittelten Datentelegramme mittels eines asymmetrischen Schlüsselpaares bestehend aus einem öffentlichen und einem privaten Schlüssel authentifiziert werden, um die Datenintegrität der übertragenden Daten sicherzustellen. Solche Authentifizierungsverfahren setzen jedoch Automatisierungsgeräte mit einer vergleichsweise hohen Rechenkapazität voraus, um die zu sendenden und zu empfangenden Datentelegramme in Echtzeit ver- und entschlüsseln zu konnen. Die hierfür aufgewendete Rechenkapazität der Automatisierungsgeräte steht daher nicht mehr für andere Anwendungen zur Verfügung, so dass die Automatisierungsgeräte mit hohen Rechenkapazitäten ausgestattet werden müssen, wodurch die Herstellungskosten der Automatisierungsgeräte entsprechend steigen.

Alternativ schlägt z.B. die DE 1004 004 344 A1 für mit dem Internet verbundene Automatisierungsanlagen vor, die Netzwerktopologie durch das Vorsehen von unidirektionalen Kommunikationsverbindungen derart einzurichten, dass ein Zugriff aus dem Internet auf die Automatisierungsanlage durch Unbefugte nicht möglich ist. Diese Alternative berücksichtigt jedoch nicht die Möglichkeit des unbefugten Einspeisens von Datentelegrammen innerhalb der Automatisierungsanlage selbst.

Die Druckschrift US2006/123226-A1 aus der Fernmeldetechnik stellt eine dem Verfahren der Erfindung ähnliche Methode vor, jedoch ohne jegliches Erzeugen von übereinstimmenden Listen. Letzteres Merkmal ist zwar in der Druckschrift US2005/036616-A1 beschrieben, jedoch in einem anderen Zusammenhang.

Der Erfindung liegt daher die Aufgabe zugrunde, die Übertragung von Datentelegrammen zwischen Automatisierungsgeräten einer Automatisierungsanlage gegen Übertragungsfehler und Manipulationen Dritter mit vergleichsweise geringen Anforderungen an die Rechenkapazität der Automatisierungsgeräte absichern zu können.

Diese Aufgabe wird erfindungsgemäß durch ein Verfahren zum Übertragen eines Datentelegramms zwischen Automatisierungsgeräten einer Automatisierungsanlage gelöst, bei dem übereinstimmende Listen mit Sequenzen von geheimen Zeichenfolgen in beiden Automatisierungsgeräten erzeugt werden, wobei eine Sequenz aus einer beiden Automatisierungsgeräten bekannten geheimen Ausgangs-Zeichenfolge durch mehrfaches Anwenden einer Einweg-Funktion derart erzeugt wird, dass jeweils aus einer in der Sequenz vorangehenden geheimen Zeichenfolge mittels der Einweg-Funktion eine in der Sequenz nachfolgende geheime Zeichenfolge erzeugt wird. Ein Datentelegramm wird in dem ersten Automatisierungsgerät erzeugt, das einen Datenab-schnitt und eine Prüfkennung umfasst, wobei die Prüfkennung unter Verwendung zumindest des Datenabschnitts und der in der Liste des ersten Automatisierungsgerätes an n-ter Stelle der Sequenz aufgeführten geheimen Zeichenfolge generiert wird. Das Datentelegramm wird an das zweite Automatisierungsgerät übertragen und eine Vergleichs-Prüfkennung wird unter Verwendung zumindest des Datenabschnitts des empfangenen Datentelegramms und der in der Liste des zweiten Automatisierungsgerätes an n-ter Stelle der Sequenz aufgeführten geheimen Zeichenfolge erzeugt. Die Prüfkennung des empfangenen Datentelegramms wird mit der Vergleichs-Prüfkennung verglichen und das empfangene Datentelegramm wird als vertrauenswürdig eingestuft, wenn die Prüfkennung mit der Vergleichs-Prüfkennung übereinstimmt.

Unter einer Einweg-Funktion soll hierbei eine Zuordnungsvorschrift verstanden werden, die nicht umkehrbar ist, d. h. aus einem Eingangswert lässt sich unter Verwendung der Einweg-Funktion zwar ein Zielwert berechnen, eine umgekehrte Berechnung des Eingangswerts aus dem Zielwert durch Invertierung der Einweg-Funktion ist jedoch nicht oder nur mit einer vernachlässigbar kleinen Wahrscheinlichkeit möglich. Beispiele für Einweg-Funktionen sind beispielsweise sogenannte Hash-Funktionen, wie z.B. SHA-1 (SHA = Secure Hash Algorithm), SHA-256, MD5 (MD = Message Digest Algorithm).

Dadurch, dass in den Automatisierungsgeräten ein übereinstimmendes Listenpaar mit Sequenzen geheimer Zeichenfolgen vorliegt und jeweils eine geheime Zeichenfolge bei einer Übertragung eines Datentelegramms in die Generierung einer Prüfkennung einbezogen wird, lässt sich mit vergleichsweise geringem Rechenaufwand die Integrität des empfangenen Datentelegramms überprüfen. Hierzu muss nämlich lediglich unter Verwendung der entsprechenden geheimen Zeichenfolge in dem empfangenden Automatisierungsgerät eine Vergleichs-Prüfkennung erzeugt werden, die mit der in dem empfangenen Datentelegramm enthaltenen Prüfkennung verglichen wird. Das Erzeugen der Vergleichs-Prüfkennung und der Vergleich mit der übertragenen Prüfkennung benötigen verglichen mit der Anwendung eines PKI-Schlüsselverfahrens einen deutlich geringeren Rechenaufwand.

Eine vorteilhafte Weiterbildung des erfindungsgemäßen Verfahrens sieht vor, dass das Datentelegramm als ungültig verworfen wird, wenn die Prüfkennung von der Vergleichs-Prüfkennung abweicht. Hierdurch kann erreicht werden, dass im Falle der Nichtubereinstimmung von Prüfkennung und Vergleichs-Prüfkennung das empfangene Datentelegramm als nicht vertrauenswürdig eingestuft und als ungültig verworfen wird. Gegebenenfalls vorhandene Anweisungen in dem Datentelegramm werden folglich in dem empfangenden Automatisierungsgerät nicht ausgeführt.

Eine weitere vorteilhafte Ausführungsform des erfindungsgemäßen Verfahrens sieht vor, dass auch die Prüfkennung und die Vergleichs-Prüfkennung unter Verwendung einer Einweg-Funktion erzeugt werden. Hierdurch kann eine besondere Sicherheit bei der Übertragung der Datentelegramme erreicht werden, da aus dem Dateninhalt eines Datentelegramms keinesfalls auf die verwendete geheime Zeichenfolge zurückgeschlossen werden kann.

Eine weitere vorteilhafte Ausführungsform des erfindungsgemäßen Verfahrens besteht darin, dass bei jeder weiteren Übertragung eines Datentelegramms die Prüfkennung und die Vergleichs-Prüfkennung mit einer solchen geheimen Zeichenfolge erzeugt werden, die der bei der jeweils letzten Übertragung eines Datentelegramms verwendeten geheimen Zeichenfolge in der Sequenz vorangeht.

Durch die Verwendung der geheimen Zeichenfolgen der Sequenz in umgekehrter Reihenfolge - also beginnend beispielsweise bei der letzten geheimen Zeichenfolge der Sequenz für die Übertragung eines ersten Datentelegramms, gefolgt von jeweils in der Sequenz weiter vorn stehenden geheimen Zeichenfolgen für jede weitere Übertragung eines Datentelegramms - kann eine noch größere Sicherheit gegen Manipulationen von unbefugten Dritten erreicht werden. Ein Angreifer kann nämlich von einem abgehörten Datentelegramm nicht auf die Prüfkennung des folgenden Datentelegramms schließen, weil die durch die Einweg-Funktion erzeugten geheimen Zeichenfolgen einen Rückschluss auf jeweils in der Reihe vorangehende geheime Zeichenfolgen ausschließen.

In diesem Zusammenhang wird es als vorteilhaft angesehen, wenn hierbei jeweils eine solche geheime Zeichenfolge verwendet wird, die der bei der letzten Übertragung eines Datentelegramms verwendeten geheimen Zeichenfolge in der Sequenz unmittelbar vorangeht. Auf diese Weise lassen sich nämlich in effizienter Weise alle geheime Zeichenfolgen der Sequenz zur Übertragung von Datentelegrammen verwenden, ohne dass von einem abgehörten Datentelegramm auf eine Prüfkennung des nächsten Datentelegramms geschlossen werden kann.

Gemäß einer weiteren vorteilhaften Ausführungsform ist vorgesehen, dass das in dem ersten Automatisierungsgerät erzeugte Datentelegramm auch einen Indexwert umfasst, der angibt, an welcher Stelle in der Sequenz die für die Prüfkennung dieses Datentelegramms verwendete geheime Zeichenfolge steht. Hierdurch kann vorteilhaft erreicht werden, dass auch bei einer willkürlichen Auswahl geheimer Zeichenfolgen durch das erste Gerät oder beim Verlust eines gesendeten Datentelegramms aus einer Serie aufeinanderfolgender Datentelegramme das zweite Automatisierungsgerät die passende geheime Zeichenfolge zur Prüfung der Integrität des empfangenen Datentelegramms leicht auffinden kann.

In diesem Zusammenhang wird es als vorteilhaft angesehen, wenn das zweite Automatisierungsgerät aus dem empfangenen Datentelegramm den Indexwert ausliest und zur Bildung der Vergleichs-Prüfkennung diejenige geheime Zeichenfolge verwendet, die an der durch den Indexwert angegebenen Stelle in der Sequenz steht.

Hinsichtlich der Erzeugung der Sequenzen von geheimen Zeichenfolgen in beiden Automatisierungsgeräten wird es als vorteilhaft angesehen, wenn bei einer Übertragung eines Datentelegramms von dem ersten Automatisierungsgerät an das zweite Automatisierungsgerät andere Listen mit Sequenzen geheimer Zeichenfolgen verwendet werden als bei einer Übertragung eines Datentelegramms von dem zweiten Automatisierungsgerät an das erste Automatisierungsgerät. Auf diese Weise wird die Absicherung gegen unbefugte Manipulation von Datentelegrammen noch stärker, da für Sende- und Empfangsrichtung eines Automatisierungsgerätes unterschiedliche Listenpaare mit geheimen Zeichenfolgen verwenden werden.

Gemäß einer weiteren vorteilhaften Ausführungsform des erfindungsgemäßen Verfahrens ist vorgesehen, dass die geheime Ausgangs-Zeichenfolge in einem der beiden Automatisierungsgeräte zufällig erzeugt und in verschlüsselter Form an das andere Automatisierungsgerät übertragen wird. Auf diese Weise kann nämlich die geheime Ausgangs-Zeichenfolge die als Start-Wert für die Berechnung der Listen der Sequenz geheimer Zeichenfolgen verwendet wird, gegen unbefugtes Ausspähen abgesichert werden. Als Verschlüsselungsverfahren kann beispielsweise ein PKI-Verfahren mit asymmetrischem Schlüsselpaar verwendet werden, da es ohnehin von vielen Automatisierungsgeräten bereits beherrscht wird. Da eine geheime Ausgangs-Zeichenfolge eher selten übertragen werden muss, ist die hierdurch erzeugte Rechenlast vernachlässigbar gering.

Vorteilhafterweise kann ferner vorgesehen sein, dass nach Verwendung der letzten in der Sequenz aufgeführten geheimen Datenfolge, die noch nicht zur Bildung einer Prüfkennung und einer Vergleichs-Prüfkennung verwendet worden ist, in beiden Automatisierungsgeräten eine neue Sequenz geheimer Zeichenfolgen unter Verwendung einer neuen Ausgangs-Zeichenfolge erzeugt wird. Auf diese Weise wird sichergestellt, dass in beiden Automatisierungsgeräten immer eine ausreichende Anzahl geheimer Zeichenfolgen für die Übertragung von Datentelegrammen vorrätig ist. Die Erzeugung der neuen Sequenz kann hierbei vorteilhaft als Hintergrundfunktion durchgeführt werden, so dass die Rechenleistung der Automatisierungsgeräte hierdurch nur unwesentlich beeinflusst wird.

Die oben genannte Aufgabe wird auch durch ein Automatisierungsgerät mit einer Steuereinrichtung und einer Kommunikationseinrichtung gelöst, die zur Übertragung von Datentelegrammen über eine Kommunikationsverbindung an ein zweites Automatisierungsgerät eingerichtet ist, wobei die Steuereinrichtung zur Durchführung eines Verfahrens gemäß einem der vorangehend beschriebenen Ausführungsbeispiele eingerichtet ist.

Als besonders vorteilhaft wird es angesehen, wenn das Automatisierungsgerät ein Automatisierungsgerät für eine Automatisierungsanlage eines elektrischen Energieversorgungsnetzes ist. Da elektrische Energieversorgungsnetze nämlich zu den besonders sensiblen Infrastrukturen und damit schützenswerten Objekten gehören, bestehen hinsichtlich der Sicherheitsanforderungen für entsprechende Automatisierungsanlagen besonders hohe Anforderungen.

Die oben genannte Aufgabe wird ferner durch eine Automatisierungsanlage mit mindestens zwei entsprechend der vorangehenden Beschreibung ausgeführten Automatisierungsgeräten gelöst, die zur Übertragung von Datentelegrammen über eine Kommunikationsverbindung miteinander verbunden sind.

Die Erfindung soll im Folgenden anhand von Ausführungsbeispielen näher erläutert werden. Hierzu zeigen

Fig. 1             eine schematische Ansicht einer Automatisierungsanlage,

Fig. 2             eine schematische Ansicht zweier Automatisierungsgeräte,

Fig. 3             ein Verfahrensschema zur Erläuterung der Übertragung von Datentelegrammen zwischen zwei Automatisierungsgeräten,

Fig. 4A und 4B     Beispiele von Datentelegrammen und

Fig. 5             ein Verfahrensschema zur Erläuterung der Bildung von Listen mit Sequenzen geheimer Zeichenfolgen.

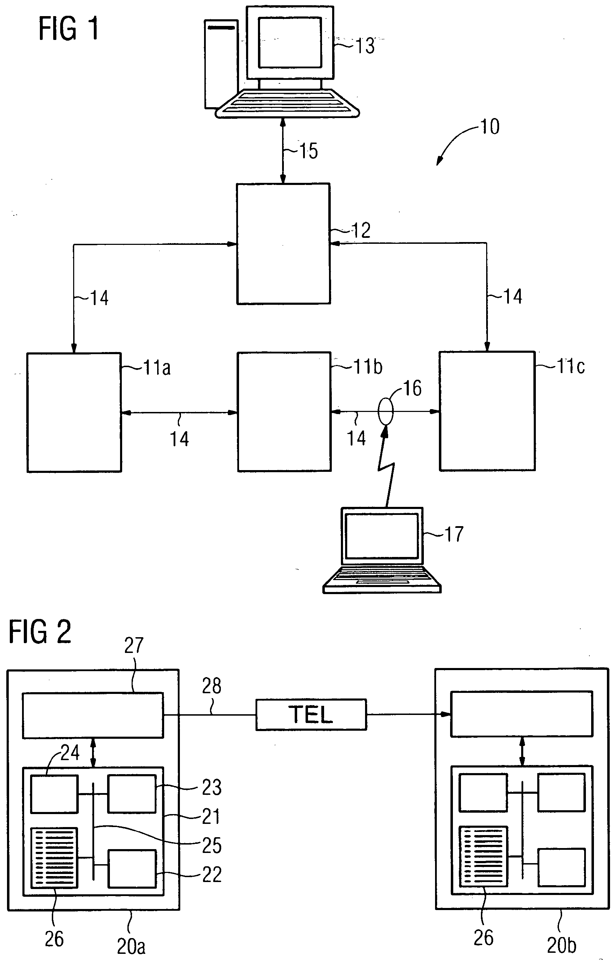

Fig. 1 zeigt eine Automatisierungsanlage 10. Für die folgenden Ausführungen sei beispielhaft angenommen, dass es sich bei der Automatisierungsanlage 10 um eine Automatisierungsanlage eines elektrischen Energieversorgungsnetzes handeln soll. Die Erfindung kann jedoch auch auf andere Automatisierungsanlagen, z.B. zur Automatisierung von Produktionsprozessen oder industriellen Anlagen angewandt werden.

Die Automatisierungsanlage 10 umfasst sogenannte Feldgeräte 11a, 11b und 11c, die in räumlicher Nähe zu dem (nicht dargestellten) automatisierten Energieversorgungsnetz angeordnet sind und bei denen es sich zum Beispiel um elektrische Schutzgeräte oder elektrische Leitgeräte handeln kann. Solche Feldgeräte dienen z.B. zum automatisierten Überwachen und Schützen von Teilen des elektrischen Energieversorgungsnetzes und zum ferngesteuerten Öffnen und Schließen elektrischer Schalter in dem elektrischen Energieversorgungsnetz. Weitere Beispiele für Feldgeräte in Automatisierungsanlagen für Energieversorgungsnetze sind z.B. Power-Quality-Geräte zur Erfassung der Elektroenergiequalität in dem Energieversorgungsnetz.

Die Automatisierungsanlage 10 umfasst ferner ein Stationsleitgerät 12, das übergeordnete Steuerfunktionen und eine Zusammenfassung von Messwerten und Meldungen der Feldgeräte 11a, 11b, 11c vornimmt. Außerdem umfasst die Automatisierungsanlage 10 ein Netzleitgerät 13, beispielsweise eine Datenverarbeitungseinrichtung einer Netzleitstelle zum Bedienen und Beobachten des elektrischen Energieversorgungsnetzes. Die Feldgeräte 11a, 11b, 11c, das Stationsleitgerät 12 und das Netzleitgerät 13 sollen im Folgenden zusammengefasst als Automatisierungsgeräte bezeichnet werden.

Die Feldgeräte 11a, 11b, 11c und das Stationsleitgerät 12 sind über einen ringförmigen Kommunikationsbus 14 miteinander verbunden, während zwischen dem Stationsleitgerät 12 und Netzleitgerät 13 ein separater Kommunikationsbus 15 vorgesehen ist.

Die Topologie der dargestellten Automatisierungsanlage 10 in Fig. 1 ist lediglich beispielhaft zu verstehen. Im Rahmen der Erfindung können beliebige Anlagentopologien vorgesehen sein.

Im Betrieb der Automatisierungsanlage 10 werden über die Kommunikationsbusse 14 und 15 zwischen den einzelnen Automatisierungsgeräten Datentelegramme ausgetauscht, die beispielsweise Messwerte, Ereignismeldungen und Steuerbefehle enthalten können. Zudem können über die Kommunikationsbusse 14 und 15 auch spezielle Prüf-Datentelegramme übertragen werden, die zum Überwachen der Kommunikationsverbindungen und der Topologie der Automatisierungsanlage dienen. Für alle übertragenden Datentelegramme besteht die Anforderung der Datenintegrität, d.h. dass der Inhalt der Datentelegramme nicht durch Übertragungsfehler oder Manipulation durch unbefugte Dritte verändert werden darf, weil sonst unter Umständen Fehlfunktionen der Automatisierungsanlage 10 auftreten können.

Während Übertragungsfehler im Wesentlichen aufgrund von zufälligen Störungen oder äußeren Beeinflussungen der Übertragungsstrecken hervorgerufen werden können, sind Manipulationen durch Dritte stets bewusst herbeigeführt.

Im Ausführungsbeispiel der Fig. 1 sei hierzu angenommen, dass an einer Stelle 16 eine Datenverarbeitungseinrichtung 17 eines nicht zur Bedienung der Automatisierungsanlage 10 befugten Dritten mit dem Kommunikationsbus 14 in Verbindung gebracht worden ist. Bei einer ungesicherten Ausführung des Kommunikationsbusses 14 kann ein Angreifer über die Datenverarbeitungseinrichtung 17 in den Kommunikationsbus 14 gefälschte oder manipulierte Datentelegramme einspeisen, die die Sicherheit der Funktionsweise der Automatisierungsanlage 10 beeinträchtigen können. Beispielsweise könnten solche Datentelegramme Befehle zum Umkonfigurieren der Automatisierungsgeräte der Automatisierungsanlage 10, gefälschte Steuerbefehle für Komponenten des elektrischen Energieversorgungsnetzes oder gefälschte Prüf-Datentelegramme, die z.B. einen Ausfall einer Kommunikationsverbindung zwischen zwei Automatisierungsgeräten vortäuschen, enthalten. Daher ist es essentiell, solche zu Manipulationszwecken eingeschleusten Datentelegramme als nicht vertrauenswürdig zu erkennen und ihren Inhalt in den Automatisierungsgeräten nicht zur Ausführung zu bringen. Eine solche Erkennung nicht vertrauenswürdiger Datentelegramme wird im Folgenden mit Bezugnahme auf die Fig. 2 bis 5 beschrieben.

Fig. 2 zeigt ein erstes Automatisierungsgerät 20a und ein zweites Automatisierungsgerät 20b einer im Weiteren nicht näher dargestellten Automatisierungsanlage. Die Automatisierungsgeräte 20a und 20b weisen im Wesentlichen denselben Aufbau auf. Daher wird dieser nur für das Automatisierungsgerät 20a beispielhaft beschrieben.

Das Automatisierungsgerät 20a weist eine Steuereinrichtung 21 auf, die eine Recheneinrichtung 22, eine Speichereinrichtung 23 und ein Sicherheitsmodul 24 umfasst. Bei der Recheneinrichtung 22 kann es sich beispielsweise um einen Mikroprozessor, z.B. eine sogenannte CPU (Central Processing Unit), handeln. Die Speichereinrichtung 23 kann durch jegliche Form eines beschreibbaren und auslesbaren Datenspeichers (z.B. Festplatte, Flashspeicher) gebildet sein. Das Sicherheitsmodul 24 ist lediglich aus Darstellungszwecken gesondert hervorgehoben gezeigt und wird üblicherweise als Software ausgebildet sein, die von der Recheneinrichtung 22 zur Ausführung gebracht wird. Die Recheneinrichtung 22, die Speichereinrichtung 23 und das Sicherheitsmodul 24 sind untereinander zum Datenaustausch über einen internen Kommunikationsbus 25 verbunden. Ferner weist die Steuereinrichtung 21 eine Liste 26 einer Sequenz von geheimem Zeichenfolgen auf, die entweder in einer separaten Speichereinrichtung abgelegt oder in der Speichereinrichtung 23 abgespeichert ist. Beide Automatisierungsgeräte 20a und 20b verfügen über identische Listen 26 mit Sequenzen von geheimen Zeichenfolgen. Solche identischen Listen werden auch als Listenpaare bezeichnet.

Die Steuereinrichtung 21 ist zum Datenaustausch mit einer Kommunikationseinrichtung 27 verbunden.. Die Kommunikationseinrichtung 27 ist zum Senden und Empfangen von Datentelegrammen "TEL" über eine Kommunikationsverbindung 28, die zwischen den Automatisierungsgeräten 20a und 20b vorgesehen ist, eingerichtet.

Die in jeder Liste 26 eines Listenpaares enthaltene Sequenz von geheimem Zeichenfolgen wird in beiden Automatisierungsgeräten 20a und 20b ausgehend von einer Ausgangs-Zeichenfolge $X_0$ in entsprechender Weise erzeugt, indem zunächst aus der Ausgangs-Zeichenfolge $X_0$ durch Anwendung einer Einweg-Funktion, beispielsweise einer Hash-Funktion H(X), eine erste geheime Zeichenfolge

$$X_1 = H(X_0)$$

gebildet wird. Durch erneute Anwendung der Einweg-Funktion wird aus dieser ersten geheimen Zeichenfolge $X_1$ eine zweite geheime Zeichenfolge

$$X_2 = H(X_1) = H(H(X_0))$$

gebildet. Diese wiederholte Anwendung der Einweg-Funktion auf die jeweils zuletzt berechnete geheime Zeichenfolge wird so lange angewendet, bis die Sequenz eine vorher festgelegte Anzahl geheimer Zeichenfolgen umfasst. Die in der Sequenz letzte geheime Zeichenfolge $X_m$ bestimmt sich folglich gemäß

$$X_m = H(X_{m-1}).$$

Zusätzlich zu den einzelnen geheimen Zeichenfolgen kann die Liste 26 auch einen der jeweiligen geheimen Zeichenfolge zugeordneten Indexwert n umfassen, der die Position in der Sequenz geheimer Zeichenfolgen angibt, an der eine bestimmte Zeichenfolge steht. Im einfachsten Falle kann dieser Indexwert n eine Durchnummerierung der geheimen Zeichenfolgen darstellen.

Lediglich beispielhaft ist im Folgenden ein Ausführungsbeispiel einer Liste 26 mit einem Indexwert n und der jeweils dazugehörenden geheimen Zeichenfolge $X_n$ dargestellt, die aus der Ausgangs-Zeichenfolge "INITIAL_VALUE" unter Anwendung einer Einweg-Funktion gemäß dem Hashalgorithmus SHA-1 erzeugt worden ist:

| n | $X_n$ | | | | |
|---|---|---|---|---|---|
| 1 | f4c64441 | 45313c04 | df52a0df | cd53cea3 | bcffc5b0 |
| 2 | 6a2eb64b | 73d1364f | c12d2fa4 | dc0642fa | 88d08986 |
| 3 | 31d6ca53 | 68ebc43a | ce2d343a | d33ef228 | 2bdd9ac5 |
| ... | ... | | | | |
| m-1 | 6891c913 | 2892281e | 909656a1 | 1f281942 | dd7bb646 |
| m | 66919992 | 29d13ad7 | 38202452 | 340bda86 | 71b1bae5 |

Bei der Erzeugung einer Sequenz geheimer Zeichenfolgen kann die Ausgangs-Zeichenfolge $X_0$ entweder zur Sequenz dazugenommen oder - wie im in der Tabelle dargestellten Beispiel - davon ausgeschlossen werden.

Dadurch, dass die verwendete Einweg-Funktion eine nichtinvertierbare, d.h. nicht umkehrbare, Zuordnung eines Eingangswertes zu einem Zielwert darstellt, kann aus einer nachfolgenden geheimen Zeichenfolge aus der Sequenz nicht auf eine der vorangehenden geheimen Zeichenfolgen geschlossen werden.

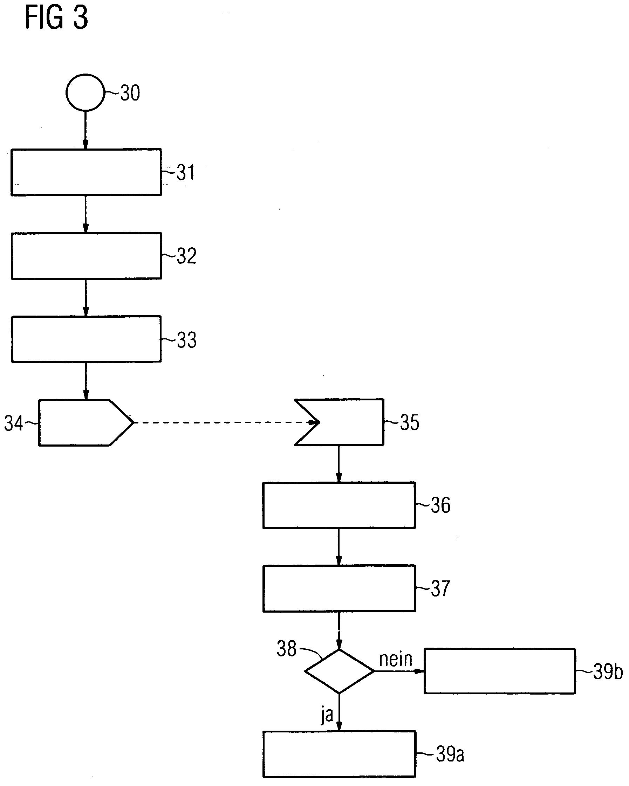

Unter gemeinsamer Betrachtung der Fig. 2 und 3 soll die manipulationsgesicherte Übertragung von Datentelegrammen zwischen den Automatisierungsgeräten 20a und 20b beschrieben werden.

Das Verfahren beginnt in dem ersten Automatisierungsgerät 20a mit der Initiierung des Versendens eines Datentelegramms bei Verfahrensschritt 30. In einem folgenden Schritt 31 wird der Inhalt des zu versendenden Datentelegramms erzeugt. Im folgenden Verfahrensschritt 32 wird im ersten Automatisierungsgerät 20a. aus der Liste 26 mit der Sequenz von geheimen Zeichenfolgen eine geheime Zeichenfolge, beispielsweise die Zeichenfolge an n-ter Stelle der Sequenz, ausgewählt. Unter Verwendung zumindest eines Datenabschnitts des zum verwendenden Datentelegramms und der ausgewählten geheimen Zeichenfolge $X_n$ wird mittels einer weiteren Einweg-Funktion, beispielsweise der sogenannten "HMAC-Funktion" (HMAC = Hash Message Authentification Code), eine Prüfkennung erzeugt, die im Schritt 33 an das zu versendende Telegramm angehangt wird.

Im Schritt 34 wird das Datentelegramm von dem ersten Automatisierungsgerät 20a an das zweite Automatisierungsgerät 20b übertragen, das im Schritt 35 das Datentelegramm empfängt.

Um auszuschließen, dass auf der Übertragungsstrecke zwischen den beiden Automatisierungsgeräten 20a bzw. 20b ein Übertragungsfehler oder eine Manipulation des Datentelegramms erfolgt ist, bestimmt das zweite Automatisierungsgerät 20b in einem weiteren Verfahrensschritt 36 unter Verwendung derselben Einweg-Funktion wie sie bereits vom ersten Automatisierungsgerät 20a zur Bestimmung der Prüfkennung im Schritt 32 verwendet worden ist, eine Vergleichs-Prüfkennung. Diese Vergleichs-Prüfkennung wird unter Verwendung zumindest des Datenabschnitts des empfangenen Datentelegramms und der aus der Liste 26 des zweiten Automatisierungsgerätes 20b ausgelesenen geheimen Zeichenfolge $X_n$ ermittelt.

Da die beiden Listen 26 in den Automatisierungsgeräten 20a und 20b auf Grundlage desselben Ausgangswertes $X_0$ erzeugt worden und somit identisch sind, stimmt auch die geheime Zeichenfolge $X_n$, die für die Bildung der Vergleichs-Prüfkennung verwendet wird, mit der in dem ersten Automatisierungsgerät 20a für die Bildung der Prüfkennung verwendeten geheimen Zeichenfolge $X_n$ überein.

Im Schritt 37 wird nun die Prüfkennung des empfangenen Datentelegramms mit der im Schritt 36 bestimmten VergleichsPrüfkennung verglichen. Wird in einem nachfolgenden Schritt 38 erkannt, dass die Vergleichs-Prüfkennung mit der Prüfkennung übereinstimmt, so wird das empfangene Datentelegramm im Schritt 39a als vertrauenswürdig eingestuft, da sich eine mit der Prüfkennung übereinstimmende Vergleichs-Prüfkennung nur ergibt, wenn auch der Datenabschnitt des Datentelegramms unverändert geblieben ist.

Wird im Verfahrensschritt 38 hingegen festgestellt, dass die Vergleichs-Prüfkennung von der Prüfkennung abweicht, so wird auf einen veränderten Datenabschnitt des Datentelegramms geschlossen und in Schritt 39b das empfangene Datentelegramm als ungültig verworfen. Nur bei einem als vertrauenswürdig eingestuften Datentelegramm werden in dem zweiten Automatisierungsgerät 20b in dem Datenabschnitt enthaltene Messwerte oder Meldungen als gültig akzeptiert oder eine gegebenenfalls in dem Datenabschnitt enthaltene Anweisung ausgeführt.

Durch das in Fig. 3 beschriebene Verfahren kann einerseits sichergestellt werden, dass ein übertragenes Datentelegramm nicht auf dem Übertragungsweg manipuliert, d.h. verändert, worden ist (sogenannter "Man-in-the-middle-Angriff"). Andererseits kann verhindert werden, dass von dritter Stelle ein auf dem Übertragungsweg zwischen den beiden Automatisierungsgeräten 20a und 20b zusätzlich eingespeistes Datentelegramm von dem zweiten Automatisierungsgerät 20b als vertrauenswürdig eingestuft wird, da der das gefälschte Datentelegramm einspeisende Angreifer nicht über die notwendige Information über die dafür zu verwendende geheime Zeichenfolge verfügt, um die korrekte Prüfkennung für das Datentelegramm zu erzeugen.

Die Sicherheit kann noch weiter erhöht werden, indem die für die jeweiligen Datenübertragungen von Datentelegrammen ausgewählten Zeichenfolgen in umgekehrter Reihenfolge der Sequenz aus der Liste 26 ausgewählt werden, d.h. dass beispielsweise nach der Übertragung eines Datentelegramms mit einer Prüfkennung, die unter Verwendung der geheimen Zeichenfolge $X_n$ erzeugt worden ist, in einer folgenden Übertragung eines Datentelegramms nur eine Verwendung einer geheimen Zeichenfolge, die der geheimen Zeichenfolge $X_n$ vorangeht, beispielsweise $X_{n-1}$ oder $X_{n-2}$, verwendet wird. Um eine möglichst effektive Ausnutzung der Liste zu gewährleisten, bietet es sich an, immer die der zuletzt verwendeten geheimen Zeichenfolge in. der Sequenz unmittelbar voranstehende Zeichenfolge zu verwenden (also z.B. erst $X_n$, dann $X_{n-1}$, dann $X_{n-2}$ usw.).

Um die Sicherheit bei der Datenübertragung noch weiter zu erhöhen, kann vorgesehen sein, dass für Sende- und Empfangsrichtung unterschiedliche Listenpaare mit Sequenzen von geheimen Zeichenfolgen bereitgehalten werden, so dass bei der Übertragung eines Datentelegramms vom ersten Automatisierungsgerät 20a an das zweite Automatisierungsgerät 20b ein anderes im Listenpaar zum Einsatz kommt, als bei der umgekehrten Übertragung eines Datentelegramms vom zweiten Automatisierungsgerät 20b an das erste Automatisierungsgerät 20a.

Außerdem ist es bei Automatisierungsanlagen mit mehr als zwei Automatisierungsgeräten von Vorteil, wenn für die Kommunikation zwischen jeweils zwei benachbarten Automatisierungsgeräten jeweils eigene Listenpaare verwendet werden, so dass jeder Übertragungsweg zwischen zwei Automatisierungsgeräten durch mindestens ein eigenes Listenpaar mit geheimen Zeichenfolgen abgesichert ist.

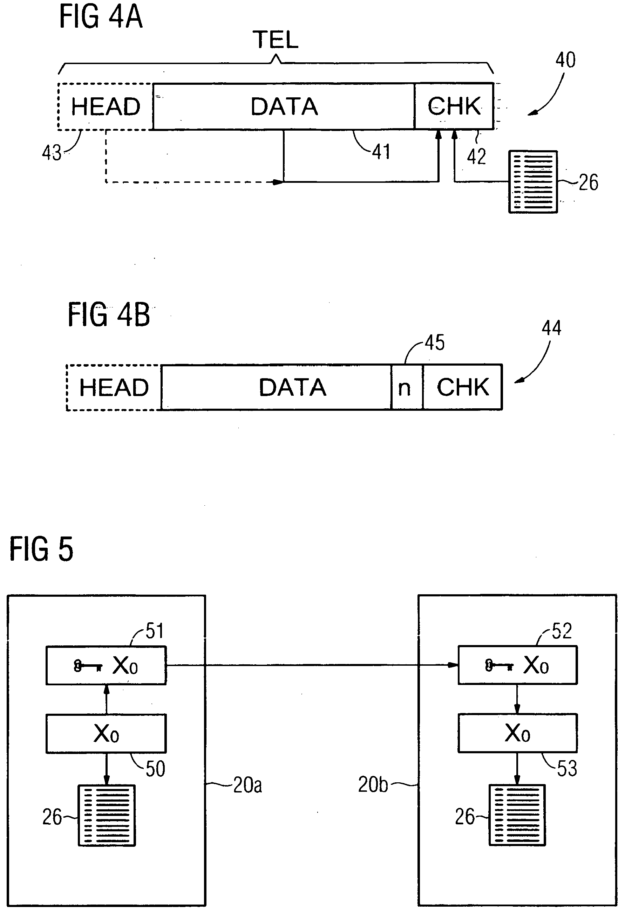

In Fig. 4A ist beispielhaft der Aufbau eines übertragenen Datentelegramms dargestellt. Das dargestellte Datentelegramm 40 umfasst einen Datenabschnitt 41 "DATA", der die eigentlichen Informationen, die mit dem Datentelegramm übertragen werden, enthält. An den Datenabschnitt 41 ist die Prüfkennung 42 "CHK" angehängt, die unter Verwendung zumindest des Datenabschnitts 41 und der aus der Liste 26 ausgelesenen geheimen Zeichenfolge $X_n$ erzeugt worden ist. Gegebenenfalls kann das Datentelegramm auch einen sogenannten Header-Abschnitt 43 "HEAD" enthaltene, der beispielsweise Absender und Empfänger des Datentelegramms sowie weitere kommunikationsrelevante Parameter enthalten kann. In diesem Fall ist es auch möglich, die Prüfkennung 42 nicht nur unter alleiniger Verwendung des Datenabschnitts 41 zu erzeugen, sondern hierfür zusätzlich auch den Header-Abschnitt 43 zu verwenden.

Fig. 4B zeigt beispielhaft ein Datentelegramm 44, das neben dem Datenabschnitt "DATA" und der Prüfkennung "CHK" sowie gegebenenfalls dem Header-Abschnitt "HEAD" auch den Indexwert n in einem Indexwertabschnitt 45 umfasst, der die Stelle in der Sequenz bezeichnet, an der die für die Prüfkennung des Datentelegramms in dem ersten Automatisierungsgerät verwendete Zeichenfolge $X_n$ steht, um dem empfangenden Automatisierungsgerät 20b die Auswahl der entsprechenden geheimen Zeichenfolge $X_n$ zu erleichtern. Gegebenenfalls kann die Prüfkennung "CHK" auch unter Verwendung des Indexwertsblocks erzeugt werden.

Der Indexwert n kann abweichend von Fig. 4B auch im Header-Abschnitt "HEAD", in der Prüfkennung "CHK" oder in dem Datenabschnitt "DATA" enthalten sein.

Da wie erläutert der Aufbau der Datentelegramme beliebig festgelegt werden kann, ist es notwendig, dass sowohl beide Automatisierungsgeräte 20a und 20b dieselben Vorschriften zur Bildung der Prüfkennung bzw. der Vergleichs-Prüfkennung anwenden.

Fig. 5 zeigt schließlich die Verfahrensweise zur Bildung eines Listenpaares mit den Listen 26 in beiden Automatisierungsgeräten 20a und 20b. Hierzu wird in einem ersten Schritt 50 eine zufällige Ausgangs-Zeichenfolge $X_0$ in dem ersten Automatisierungsgerät 20a erzeugt. In einem weiteren Schritt 51 wird diese geheime Ausgangs-Zeichenfolge $X_0$ mit einem öffentlichen Schlüssel des zweiten Automatisierungsgerätes 20b verschlüsselt und an das zweite Automatisierungsgerät 20b übertragen.

Das zweite Automatisierungsgerät 20b empfängt in Schritt 52 die verschlüsselte geheime Ausgangs-Zeichenfolge $X_0$ und entschlüsselt diese unter Verwendung ihres privaten Schlüssels im Schritt 53, so dass auch im Automatisierungsgerät 20b die geheime Ausgangs-Zeichenfolge $X_0$ in Klarform vorliegt.

Ausgehend von dieser Ausgangs-Zeichenfolge $X_0$ können in beiden Automatisierungsgeräten 20a und 20b identische Listen mit Sequenzen von geheimen Zeichenfolgen erzeugt werden, wenn für beide Automatisierungsgeräte 20a und 20b die maximale Anzahl m der geheimen Zeichenfolgen übereinstimmend festgelegt ist. Beim Einsatz des Verfahrens bietet es sich an, spätestens nach Verwendung der letzten geheimen Zeichenfolge aus der Liste 26 ein neues Listenpaar für die Automatisierungsgeräte 20a und 20b zu erzeugen. Hierzu kann beispielsweise erneut eine zufällige Ausgangs-Zeichenfolge $X_0$ in einem der Automatisierungsgeräte generiert und in verschlüsselter Form an das andere Automatisierungsgerät übertragen werden. Hierdurch stehen immer ausreichend viele geheime Zeichenfolgen für die Nutzung zur Übertragung von Datentelegrammen zur Verfügung.

Mit der beschriebenen Vorgehensweise lässt sich die Integrität eines übertragenen Datentelegramms besonders einfach, d. h. ohne deutlich erhöhte Rechenlast der Automatisierungsgeräte 20a und 20b, feststellen, da zur Prüfung der Integrität lediglich eine Vergleichs-Prüfkennung erzeugt werden und diese mit der empfangenen Prüfkennung des Datentelegramms verglichen werden muss. Hierdurch wird deutlich weniger Rechenlast in den Automatisierungsgeräten erzeugt als bei einer auf alle Datentelegramme angewendeten digitalen Signatur der Datentelegramme mit einem PKI-Schlüssel.

**Patentansprüche**

1. Verfahren zum Übertragen eines Datentelegramms von einem ersten Automatisierungsgerät (20a) einer Automatisierungsanlage an ein zweites Automatisierungsgerät (20b) der Automatisierungsanlage, bei dem folgende Schritte ausgeführt werden:

   - Erzeugen von übereinstimmenden Listen (26) mit Sequenzen von geheimen Zeichenfolgen in beiden Automatisierungsgeräten (20a, 20b), wobei eine Sequenz aus einer beiden Automatisierungsgeräten (20a, 20b) bekannten geheimen Ausgangs-Zeichenfolge durch mehrfaches Anwenden einer Einweg-Funktion derart erzeugt wird, dass jeweils aus einer in der Sequenz vorangehenden geheimen Zeichenfolge mittels der Einweg-Funktion eine in der Sequenz nachfolgende geheime Zeichenfolge erzeugt wird;
   - Erzeugen eines Datentelegramms in dem ersten Automatisierungsgerät (20a), das einen Datenabschnitt und eine Prüfkennung umfasst, wobei die Prüfkennung unter Verwendung zumindest des Datenabschnitts und der in der Liste des ersten Automatisierungsgerätes (20a) an n-ter Stelle der Sequenz aufgeführten geheimen Zeichenfolge generiert wird;
   - Übertragen des Datentelegramms an das zweite Automatisierungsgerät (20b);
   - Erzeugen einer Vergleichs-Prüfkennung unter Verwendung zumindest des Datenabschnitts des empfangenen Datentelegramms und der in der Liste des zweiten Automatisierungsgerätes (20b) an n-ter Stelle der Sequenz aufgeführten geheimen Zeichenfolge;
   - Vergleichen der Prüfkennung des empfangenen Datentelegramms mit der Vergleichs-Prüfkennung; und
   - Einstufen des empfangenen Datentelegramms als vertrauenswürdig, wenn die Prüfkennung mit der Vergleichs-Prüfkennung übereinstimmt.

2. Verfahren nach Anspruch 1,
   **dadurch gekennzeichnet, dass**

   - das Datentelegramm als ungültig verworfen wird, wenn die Prüfkennung von der Vergleichs-Prüfkennung abweicht.

3. Verfahren nach Anspruch 1 oder 2,
   **dadurch gekennzeichnet, dass**

- auch die Prüfkennung und die Vergleichs-Prüfkennung unter Verwendung einer Einweg-Funktion erzeugt werden.

4. Verfahren nach einem der vorangehenden Ansprüche,
**dadurch gekennzeichnet, dass**

- bei jeder weiteren Übertragung eines Datentelegramms die Prüfkennung und die Vergleichs-Prüfkennung mit einer solchen geheimen Zeichenfolge erzeugt werden, die der bei der jeweils letzten Übertragung eines Datentelegramms verwendeten geheimen Zeichenfolge in der Sequenz vorangeht.

5. Verfahren nach Anspruch 4,
**dadurch gekennzeichnet, dass**

- eine solche geheime Zeichenfolge verwendet wird, die der bei der letzten Übertragung eines Datentelegramms verwendeten geheimen Zeichenfolge in der Sequenz unmittelbar vorangeht.

6. Verfahren nach einem der vorangehenden Ansprüche,
**dadurch gekennzeichnet, dass**

- das in dem ersten Automatisierungsgerät (20a) erzeugte Datentelegramm auch einen Indexwert umfasst, der angibt, an welcher Stelle in der Sequenz die für die Prüfkennung dieses Datentelegramms verwendete geheime Zeichenfolge steht.

7. Verfahren nach Anspruch 6,
**dadurch gekennzeichnet, dass**

- das zweite Automatisierungsgerät (20b) aus dem empfangenen Datentelegramm den Indexwert ausliest und zur Bildung der Vergleichs-Prüfkennung diejenige geheime Zeichenfolge verwendet, die an der durch den Indexwert angegebenen Stelle in der Sequenz steht.

8. Verfahren nach einem der vorangehenden Ansprüche,
**dadurch gekennzeichnet, dass**

- bei einer Übertragung eines Datentelegramms von dem ersten Automatisierungsgerät (20a) an das zweite Automatisierungsgerät (20b) andere Listen mit Sequenzen geheimer Zeichenfolgen verwendet werden als bei einer Übertragung eines Datentelegramms von dem zweiten Automatisierungsgerät (20b) an das erste Automatisierungsgerät (20a).

9. Verfahren nach einem der vorangehenden Ansprüche,
**dadurch gekennzeichnet, dass**

- die geheime Ausgangs-Zeichenfolge in einem der beiden Automatisierungsgeräte (20a, 20b) zufällig erzeugt wird und in verschlüsselter Form an das andere Automatisierungsgerät (20b, 20a) übertragen wird.

10. Verfahren nach einem der vorangehenden Ansprüche,
**dadurch gekennzeichnet, dass**

- nach Verwendung der letzten in der Sequenz aufgeführten geheimen Datenfolge, die noch nicht zur Bildung einer Prüfkennung und einer Vergleichs-Prüfkennung verwendet worden ist, in beiden Automatisierungsgeräten (20a, 20b) eine neue Sequenz geheimer Zeichenfolgen unter Verwendung einer neuen Ausgangs-Zeichenfolge erzeugt wird.

11. Automatisierungsgerät (20a) mit einer Steuereinrichtung (21) und einer Kommunikationseinrichtung (27), die zur Übertragung von Datentelegrammen über eine Kommunikationsverbindung (28) an ein zweites Automatisierungsgerät (20b) eingerichtet ist,
**dadurch gekennzeichnet, dass**

- die Steuereinrichtung (21) zur Durchführung eines Verfahrens gemäß einem der vorangehenden Ansprüche eingerichtet ist.

12. Automatisierungsgerät nach Anspruch 11,
   **dadurch gekennzeichnet, dass**

   - es ein Automatisierungsgerät für eine Automatisierungsanlage eines elektrischen Energieversorgungsnetzes ist.

13. Automatisierungsanlage mit mindestens zwei Automatisierungsgeräten, die zur Übertragung von Datentelegrammen über eine Kommunikationsverbindung miteinander verbunden sind und gemäß einem der Ansprüche 11 oder 12 ausgebildet sind.


**Claims**

1. Method for transmitting a data message from a first automation appliance (20a) in an automation installation to a second automation appliance (20b) in the automation installation, in which the following steps are performed:

   - matching lists (26) containing sequences of secret character strings are produced in both automation appliances (20a, 20b), wherein a sequence is produced from a secret output character string, which is known to both automation appliances (20a, 20b), by repeatedly applying a one-way function such that a respective secret character string that is antecedent in the sequence is taken and the one-way function is used to produce a secret character string that is subsequent in the sequence;
   - the first automation appliance (20a) produces a data message which comprises a data section and a check identifier, wherein the check identifier is generated using at least the data section and the secret character string presented in the list of the first automation appliance (20a) at the nth position in the sequence;
   - the data message is transmitted to the second automation appliance (20b);
   - a comparison check identifier is produced using at least the data section from the received data message and the secret character string presented in the list of the second automation appliance (20b) at the nth position in the sequence;
   - the check identifier of the received data message is compared with the comparison check identifier; and
   - the received data message is classed as trustworthy if the check identifier matches the comparison check identifier.

2. Method according to Claim 1,
   **characterized in that**

   - the data message is rejected as invalid if the check identifier differs from the comparison check identifier.

3. Method according to Claim 1 or 2,
   **characterized in that**

   - the check identifier and the comparison check identifier are also produced using a one-way function.

4. Method according to one of the preceding claims,
   **characterized in that**

   - every further transmission of a data message involves the check identifier and the comparison check identifier being produced with a secret character string which is antecedent to the secret character string used for the respective last transmission of a data message in the sequence.

5. Method according to Claim 4,
   **characterized in that**

   - a secret character string is used which is directly antecedent to the secret character string used for the last transmission of a data message in the sequence.

6. Method according to one of the preceding claims,

**characterized in that**

- the data message produced in the first automation appliance (20a) also comprises an index value which indicates the position in the sequence at which the secret character string used for the check identifier of this data message is located.

7. Method according to Claim 6,
   **characterized in that**

   - the second automation appliance (20b) reads the index value from the received data message and forms the comparison check identifier by using that secret character string which is located at the position in the sequence which is indicated by the index value.

8. Method according to one of the preceding claims
   **characterized in that**

   - transmission of a data message from the first automation appliance (20a) to the second automation appliance (20b) involves the use of different lists containing sequences of secret character strings than transmission of a data message from the second automation appliance (20b) to the first automation appliance (20a).

9. Method according to one of the preceding claims,
   **characterized in that**

   - the secret output character string is produced randomly in one of the two automation appliances (20a, 20b) and is transmitted to the other automation appliance (20b, 20a) in encrypted form.

10. Method according to one of the preceding claims,
    **characterized in that**

    - following the use of the last secret data string presented in the sequence that has not yet been used for forming a check identifier and a comparison check identifier, both automation appliances (20a, 20b) produce a new sequence of secret character strings using a new output character string.

11. Automation appliance (20a) having a control device (21) and a communication device (27), which is set up for transmitting data messages via a communication link (28) to a second automation appliance (20b),
    **characterized in that**

    - the control device (21) is set up to perform a method according to one of the preceding claims.

12. Automation appliance according to Claim 11,
    **characterized in that**

    - it is an automation appliance for an automation installation in an electrical power supply system.

13. Automation installation having at least two automation appliances which are connected to one another for the purpose of transmitting data messages via a communication link and are in a form according to one of Claims 11 and 12.


**Revendications**

1. Procédé de transfert d'un télégramme de données d'un premier appareil ( 20a ) d'automatisation d'une installation d'automatisation à un deuxième appareil ( 20b ) d'automatisation de l'installation d'automatisation, dans lesquels on effectue les stades suivants :

   - production de listes (26) en coïncidence ayant des séquences de suites de caractères secrètes dans les deux appareils (20a, 20b ) d'automatisation, une séquence d'une suite de caractères de départ secrète connue de l'un des deux appareils (20a, 20b ) d'automatisation étant produite en appliquant plusieurs fois une fonction à sens unique, de manière à produire, à partir d'une suite de caractères secrète précédente dans la séquence, au moyen de la fonction à sens unique, une suite de caractères secrète suivante dans la séquence;

- production d'un télégramme de données dans le premier appareil ( 20a ) d'automatisation, qui comprend une partie de données et une identification de contrôle, l'identification de contrôle étant créée en utilisant au moins la partie de données et la suite de caractères secrète indiquée à la énième position de la séquence dans la liste du premier appareil ( 20a ) d'automatisation;

- transmission du télégramme de données au deuxième appareil ( 20b ) d'automatisation;

- production d'une identification de contrôle de comparaison en utilisant au moins la partie de données du télégramme de données reçu et la suite de caractères secrète mentionnée à la énième position de la séquence dans la liste du deuxième appareil ( 20b ) d'automatisation;

- comparaison de l'identification de contrôle du télégramme de données reçu à l'identification de contrôle de comparaison et

- classement du télégramme de données reçu comme digne de confiance, si l'identification de contrôle coïncide avec l'identification de contrôle de comparaison.

2. Procédé suivant la revendication 1,
**caractérisé en ce que**

- on rejette comme non valable le télégramme de données, si l'identification de contrôle s'écarte de l'identification de contrôle de comparaison.

3. Procédé suivant la revendication 1 ou 2,
**caractérisé en ce que**

- on produit aussi l'identification de contrôle et l'identification de contrôle de comparaison en utilisant une fonction à sens unique.

4. Procédé suivant l'une des revendications précédentes,
**caractérisé en ce que**

- à chaque autre transmission d'un télégramme de données, on produit l'identification de contrôle et l'identification de contrôle de comparaison par une suite de caractères secrète telle qu'elle précède dans la séquence la suite de caractères secrète utilisée lors de la dernière transmission d'un télégramme de données.

5. Procédé suivant la revendication 4,
**caractérisé en ce que**

- on utilise une suite de caractères secrète telle qu'elle précède directement dans la séquence la suite de caractères secrète utilisée dans la dernière transmission d'un télégramme de données.

6. Procédé suivant l'une des revendications précédentes,
**caractérisé en ce que**

- le télégramme de données produit dans le premier appareil ( 20a ) d'automatisation comprend aussi une valeur d'indice, qui indique en quelle position dans la séquence se trouve la suite de caractères secrète utilisée pour l'identification de contrôle de ces télégrammes de données.

7. Procédé suivant la revendication 6,
**caractérisé en ce que**

- le deuxième appareil (20b) d'automatisation déchiffre la valeur d'indice dans le télégramme de données reçu et, pour former l'identification de contrôle de comparaison, utilise la suite de caractères secrète qui, dans la séquence, est à la position indiquée par la valeur d'indice.

8. Procédé suivant l'une des revendications précédentes,
**caractérisé en ce que**

- pour une transmission d'un télégramme de données du premier appareil ( 20a ) d'automatisation au deuxième appareil ( 20b ) d'automatisation, on utilise des listes ayant des séquences de suites de caractères secrètes autres que pour une transmission d'un télégramme de données du deuxième appareil ( 20b ) d'automatisation au premier appareil ( 20a ) d'automatisation.

9. Procédé suivant l'une des revendications précédentes,
**caractérisé en ce que**

- on produit aléatoirement la suite de caractères de départ secrète dans l'un des deux appareils ( 20a, 20b ) d'automatisation et on la transmet sous forme chiffrée à l'autre appareil ( 20b, 20a ) d'automatisation.

10. Procédé suivant l'une des revendications précédentes,
**caractérisé en ce que**

- après l'utilisation de la dernière suite de données secrète mentionnée dans la séquence, qui n'a pas encore été utilisée pour former une identification de contrôle et une identification de contrôle de comparaison, on produit, dans les deux appareils ( 20a, 20b ) d'automatisation, une nouvelle séquence de suite de caractères secrète en utilisant une nouvelle suite de caractères de départ.

11. Appareil ( 20a ) d'automatisation comprenant un dispositif ( 21 ) de commande et un dispositif ( 27 ) de communication, qui est conçu pour transmettre des télégrammes de données par une liaison (28) de communication à un deuxième appareil ( 20b ) d'automatisation,
**caractérisé en ce que**

- le dispositif ( 21 ) de commande est conçu pour effectuer un procédé suivant l'une des revendications précédentes.

12. Appareil d'automatisation suivant la revendication 11,
**caractérisé en ce que**

- c'est un appareil d'automatisation pour une installation d'automatisation d'un réseau d'alimentation en énergie électrique.

13. Installation d'automatisation comprenant au moins deux appareils d'automatisation, qui sont reliés entre eux pour la transmission de télégrammes de données par l'intermédiaire d'une liaison de communication et qui sont constitués suivant l'une des revendications 11 ou 12.

FIG 1

FIG 2

# FIG 3

## FIG 4A

## FIG 4B

## FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1004004344 A1
- US 2006123226 A1

- US 2005036616 A1